# Europäisches Patentamt

## European Patent Office

## Office européen des brevets

(11) Veröffentlichungsnummer: **0 110 274**
A2

## (12) EUROPÄISCHE PATENTANMELDUNG

(21) Anmeldenummer: 83111595.1

(22) Anmeldetag: 19.11.83

(51) Int. Cl.³: **G 01 N 27/26**

(30) Priorität: 29.11.82 DE 3244154

(43) Veröffentlichungstag der Anmeldung: 13.06.84
Patentblatt 84/24

(84) Benannte Vertragsstaaten: **AT BE CH FR GB LI NL SE**

(71) Anmelder: **Deutsches Krebsforschungszentrum, Im Neuenheimer Feld 280, D-6900 Heidelberg 1 (DE)**

(72) Erfinder: **Waldeck, Waldemar, Tilsiterstrasse 49, D-6941 Laudenbach (DE)**
Erfinder: **Zenke, Martin, Dr., Inst. Chimie Biol. 11, Rue Humann, F-67085 Strasbourg (FR)**
Erfinder: **Müller, Ingo, Zuzenhauserstrasse 22, D-6922 Meckesheim (DE)**

(74) Vertreter: **Gottlob, Peter, Kernforschungszentrum Karlsruhe GmbH Weberstrasse 5, D-7500 Karlsruhe 1 (DE)**

(54) Elektrophoresegerät.

(57) Die Erfindung betrifft ein Elektrophoresegerät mit zwei Elektroden und mindest einer zwischen den Elektroden liegenden Trennkammer mit einem Gel zur Trennung von Makromolekülen. Die der Erfindung gestellte Aufgabe besteht darin, ein Elektrophoresegerät zu bieten, mit dem Moleküle, wie z.B. Desoxyribonukleinsäure oder Ribonukleinsäure, bei konstantem pH-Wert in niedrig konzentrierten Gelen, u.a. mit Pufferlösung überschichtetem Gel oder mit Pufferumwälzung, analytisch aufgelöst werden können. Die Lösung ist dadurch gekennzeichnet, daß die Trennkammer horizontal angeordnet ist und daß die die Elektroden und eine Pufferlösung aufnehmenden Behälter an zwei sich gegenüberliegenden Seiten der Trennkammer liegen, derart, daß die Pufferlösung mit zumindest Teilen des Gels in Kontakt steht. Der besondere Vorteil des erfindungsgemäßen Elektrophoresegerätes besteht u.a. darin, daß die Elektrophorese im Bedarfsfall in zwei verschiedenen, senkrecht zueinander verlaufenden Richtungen mit z.B. unterschiedlichen Lösungsmitteln durchgeführt werden kann.

0110274

Elektrophoresegerät    - 1 -

Die Erfindung betrifft ein Elektrophoresegerät mit zwei Elektroden und mindest einer zwischen den Elektroden liegenden Trennkammer mit einem Gel zur Trennung von Makromolekülen.

Es sind Elektrophoresegeräte bekannt, die zur Trennung von Makromolekülen aus einer Substanz verwendet werden, z.B. zur Trennung von Proteinen, Glycoproteinen und Polysacchariden. Die Trennung kann nach Molekulargewicht oder nach strukturellen Eigenschaften erfolgen. Betrieben werden diese Elektrophoresegeräte in vertikaler Anordnung, wobei die Trennkammer aus einem zwischen zwei Glasplatten befindlichen Gel besteht. Sie sind nicht für die Trennung hochmolekularer Substanzen in Gelsystemen mit geringster Konzentration geeignet. Zeitlich schnelle Analysen werden zudem-aufgrund höherer anzulegender elektrischer Spannungen- durch zu hohe Wärmeentwicklung im Gel zwischen den Glasplatten praktisch verhindert.

Die der Erfindung gestellte Aufgabe besteht nunmehr darin, ein Elektrophoresegerät zu bieten, mit dem Moleküle, wie z.B. Desoxyribonukleinsäure oder Ribonukleinsäure, bei konstantem pH-Wert in niedrig konzentrierten Gelen, u.a. mit Pufferlösung überschichtetem Gel oder mit Pufferumwälzung, analytisch aufgelöst werden können.

Die Lösung ist in den kennzeichnenden Merkmalen des Anspruchs 1 beschrieben.

- 2 -

Die übrigen Ansprüche geben vorteilhafte Ausführungsformen und Weiterbildungen der Erfindung wieder.

Der besondere Vorteil des erfindungsgemäßen Elektrophoresegerätes besteht u.a. darin, daß die Elektrophorese im Bedarfsfall in zwei verschiedenen, senkrecht zueinander verlaufenden Richtungen mit z.B. unterschiedlichen Lösungsmitteln durchgeführt werden kann.

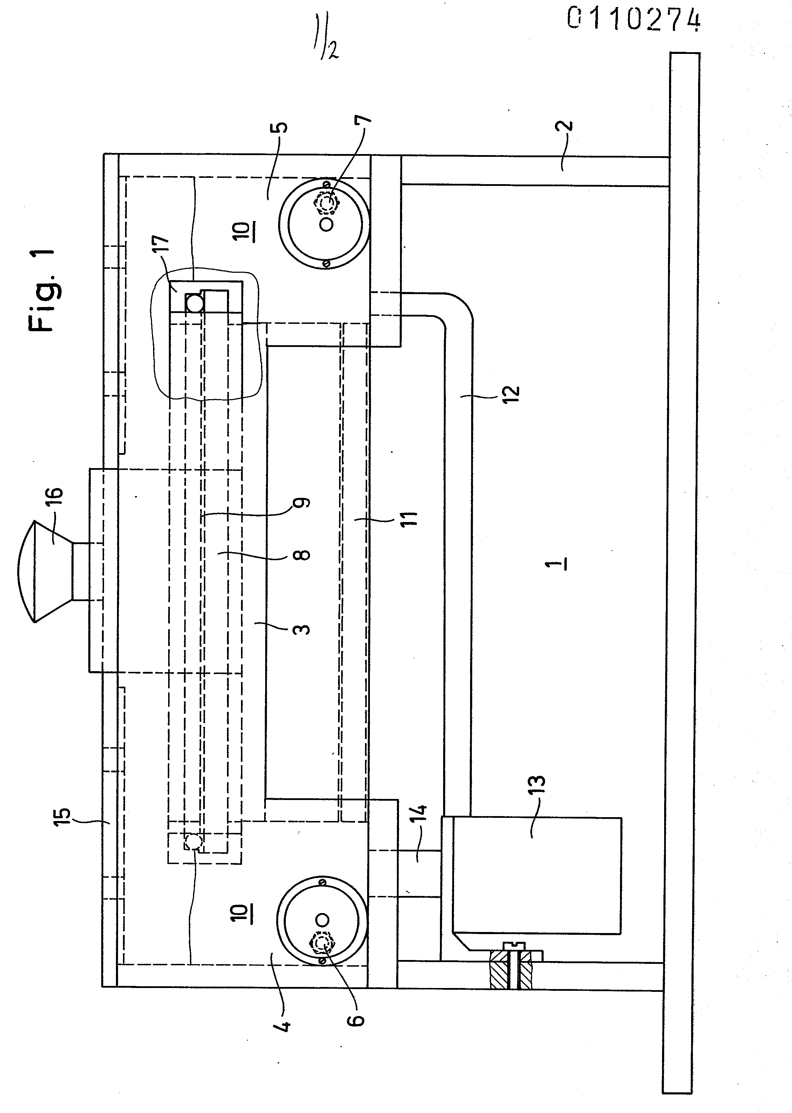

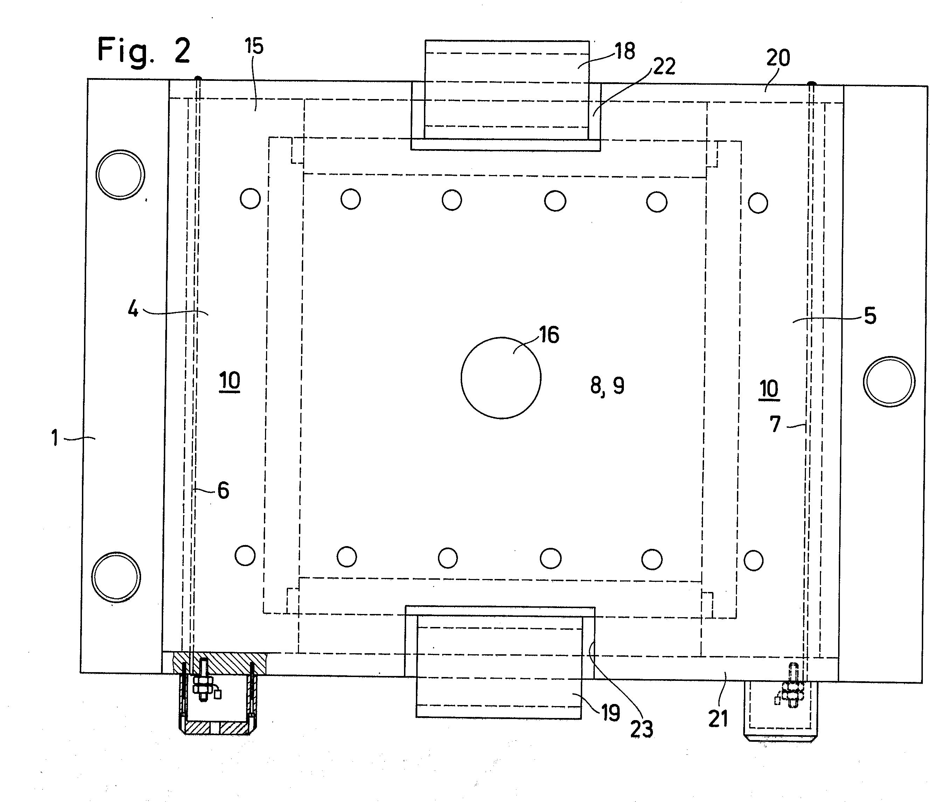

Die Erfindung wird im folgenden anhand eines Ausführungsbeispieles mittels der Fig. 1 und 2 näher beschrieben, wobei die Figuren unterschiedliche Ansichten des Elektrophoresegerätes darstellen.

Das in der Fig. 1 dargestellte Elektrophoresegerät 1 besteht aus einem Gehäuserahmen 2, in dem eine Bodenplatte 3 mit zwei Behältern 4 und 5 für die Aufnahme von Pufferlösung 10 und zwei Elektroden 6 und 7 untergebracht sind. Die Behälter 4 und 5 verlaufen nach unten abgesetzt parallel zueinander entlang zwei sich gegenüberliegenden Seiten der Bodenplatte 3. Auf die Bodenplatte 3 ist eine Trägerplatte 8 aufsetzbar, die mit einer horizontal liegenden Gelschicht 9 als Trennkammer für die Elektrophoresetrennung, meist aus Agarose, bedeckt ist. In ihr werden in bekannter Weise Schlitze eingefügt, von denen die Trennung der Makromoleküle in parallelen Streifen ausgeht. Die Pufferlösung 10 steht in den Behältern 4 und 5 so hoch, daß sie die Gelschicht 9 überdeckt oder zumindest bis an deren Seitenränder heranreicht.

- 3 -

Zur Herstellung eines konstanten pH-Wertes über die
Dauer der Analyse findet eine stetige Umwälzung
der Pufferlösung 10 zwischen den beiden Behältern
4 und 5 statt. Eine Verbindungsleitung 11 verbindet
beide Behälter 4 und 5 direkt, während von dem Behälter 5 eine Ableitung 12 zu einer Umwälzpumpe
13 führt, die die Pufferlösung 10 wieder über die
Leitung 14 in den Behälter 4 zurückpumpt. Die Umwälzpumpe 13 ist am Gehäuserahmen 2 befestigt.
Die Elektrophoresekammer bzw. -gerät 1 kann mit einem
Deckel 15 mit Knauf 16 zugedeckt werden. Um die Trägerplatte 8 herum, oder an einigen seiner Seiten, befindet
sich ein abgedichteter zerlegbarer Rahmen zum Gießen
des Gels.

Die Fig. 2 zeigt eine Aufsicht auf die Elektrophoresekammer 1. Die Trägerplatte 8 für das Gel 9 besitzt
zwei seitlich angebrachte Griffe 18 und 19, mit denen
sie sowohl auf den Rändern 20, 21 (die Griffe ragen dann
durch entsprechende Öffnungen 22, 23 im Deckel 15 hindurch) aufgesetzt bzw. aus dem Elektrophoresegerät 1
herausgenommen werden kann. Die beiden Behälter 4
und 5 für die Pufferlösung 10 und die beiden Elektroden 6 und 7 sind zylinderförmig ausgebildet und
nach oben offen ausgeführt.

Zur Einsparung von Pufferlösung 10 und höherer
Elektrophoresegeschwindigkeit ist es möglich, die
beiden mit Pufferlösung 10 in Verbindung zu
bringenden Seiten der Gelschicht 9 seitlich in die
Behälterinnnenräume herunterzuziehen, wobei selbstverständlich die Trägerplatte 9 passende Seitenstücke aufzuweisen hat, auf der das Gel 9 ebenfalls
aufgebracht ist. Trennvorgänge werden allerdings in
diesen Bereichen nicht vorgenommen.

- 1 -

Deutsches Krebsforschungszentrum

Heidelberg, 30.9.1983
PLA 8270    Ga/hr

Patentansprüche:

1. Elektrophoresegerät mit zwei Elektroden und mindestens einer zwischen den Elektroden liegenden Trennkammer mit einem Gel zur Trennung von Makromolekülen, dadurch gekennzeichnet, daß die Trennkammer (8,9) horizontal angeordnet ist, und daß die die Elektroden (6, 7) und eine Pufferlösung (10) aufnehmenden Behälter (4, 5) an zwei sich gegenüberliegenden Seiten der Trennkammer (8, 9) liegen, derart, daß die Pufferlösung (10) mit zumindest Teilen des Gels (9) in Kontakt steht.

2. Elektrophoresegerät nach Anspruch 1, dadurch gekennzeichnet, daß die Behälter (4, 5) als langgestreckte Zylinder ausgebildet sind, deren Inhalt mit jeweils einer der sich gegenüberliegenden Seiten der Trennkammer (8, 9) mit dem Gel (9) in Verbindung steht.

3. Elektrophoresegerät nach Anspruch 1 und 2, dadurch gekennzeichnet, daß die Trennkammer (8, 9) aus einer Trägerplatte (8) besteht, auf der das Gel (9) aufgebracht ist.

4. Elektrophoresegerät nach Anspruch 1 oder einem der folgenden, dadurch gekennzeichnet, daß die Trägerplatte (8) auf einer Bodenplatte (3) angeordnet

- 2 -

ist, die die beiden Behälter (4, 5) miteinander verbindet.

5. Elektrophoresegerät nach Anspruch 1 oder einem der folgenden, dadurch gekennzeichnet, daß die Trennkammer (8, 9) als tragbarer Rahmen (8, 18, 19) ausgebildet ist.

6. Elektrophoresegerät nach Anspruch 1 oder einem der folgenden, dadurch gekennzeichnet, daß die Pufferlösungen (10) in den beiden Behältern (4, 5) über eine Umwälzeinrichtung (11- 14) verbunden sind.

7. Elektrophoresegerät nach Anspruch 1 oder einem der folgenden, dadurch gekennzeichnet, daß verschiedene Trennkammern übereinander angeordnet sind.

Fig. 1

Fig. 2